# EUROPEAN PATENT APPLICATION

(11) **EP 4 303 983 A1**
(43) Date of publication of application: **10.01.2024**
(21) Application number: 23183764.2
(22) Date of filing: 06.07.2023
(51) Int. Cl.: H01M 10/46, H01M 10/654, H01M 50/105, H01M 50/119, H01M 50/124

(54) **ELECTROCHEMICAL DEVICE, ELECTROCHEMICAL DEVICE ASSEMBLY, AND ELECTRONIC DEVICE**

(30) Priority: 06.07.2022 CN 202210790529
(71) Applicant: Ningde Amperex Technology Ltd., Ningde City, Fujian 352100 (CN)
(72) Inventor: ZHANG, Guowen, Ningde City, Fujian 352100 (CN); MA, Wu, Ningde City, Fujian 352100 (CN)
(74) Representative: Icosa

(57) **Abstract**

The present application relates to the technical field of energy storage, and discloses an electrochemical device (1), an electrochemical device component (2), and an electronic device (3). The electrochemical device (1) includes a receiving housing (100) and an electrode assembly (200). The receiving housing (100) includes a first housing (110) and a second housing (120), the first housing (110) and the second housing (120) are arranged opposite to each other in a thickness direction of the electrochemical device (1), and together define a receiving cavity (101). The first housing (110) includes a first polymer layer (114), a first metal layer (113) and a second polymer layer (115) disposed in a stacking manner, the first polymer layer (114) is arranged on a side of the first metal layer (113) facing the second housing (120), and the first polymer layer (114) is provided with a first through slot (1101) penetrating in the thickness direction, so that a surface of the first metal layer (113) includes a first area (1131) corresponding to the first through slot (1101) and a second area provided with the first polymer layer (114), and the first area is located between the electrode assembly (200) and the second polymer layer (115). The electrochemical device (1) can improve the current situation of continuous accumulation of internal heat in the operation process of the electrochemical device (1), thereby reducing the risk of thermal runaway of the electrochemical device (1).

## Description

### TECHNICAL FIELD

The present application relates to the technical field of energy storage, in particular to an electrochemical device, an electrochemical device component, and an electronic device.

### BACKGROUND

An electrochemical device is a device that converts external energy into electric energy and stores the electric energy therein, so as to supply power to external devices (such as portable electronic devices) at the time of need. Generally, an electrochemical device includes a receiving housing, an electrode assembly received in the receiving housing, and battery tabs. The receiving housing defines a receiving cavity for receiving the electrode assembly. The electrode assembly includes a first electrode plate, a second electrode plate, and a separator. A polarity of the first electrode plate is opposite to that of the second electrode plate, and the separator is arranged between the first electrode plate and the second electrode plate for separation. One end of one of the battery tabs is connected to the first electrode plate, and the other end of the battery tab extends out of the receiving housing; and one end of the other battery tab is connected to the second electrode plate, and the other end of the battery tab extends out of the receiving housing.

Presently, the receiving housing of the electrochemical device generally includes a first polymer layer, a metal layer, and a second polymer layer disposed in a stacking manner. The first polymer layer is arranged on one side of the metal layer facing the inside of the receiving housing, and due to the arrangement of the first polymer layer, hot melt packaging of the receiving housing is facilitated. The second polymer layer is arranged on the side of the metal layer facing the outside of the receiving housing, so as to reduce the corrosion rate of the metal layer by the external environment.

### SUMMARY

The applicant(s) of the present application has discovered in the process of implementing the present application that: in the operation process of an electrochemical device, an electrode assembly may generate a large amount of heat, and the heat may accumulate continuously in a receiving housing, which may cause thermal runaway of the electrochemical device.

The present application aims to provide an electrochemical device, an electrochemical device component, and an electronic device to reduce the risk of thermal runaway in current electrochemical devices.

In order to solve the above technical problems, the present application adopts the following technical solutions:
In a first aspect, some embodiments of the present application provide an electrochemical device. The electrochemical device includes a receiving housing and an electrode assembly. The receiving housing includes a first housing and a second housing, the first housing and the second housing are arranged opposite to each other in a thickness direction of the electrochemical device, and together define a receiving cavity. The electrode assembly is received in the receiving cavity. The first housing includes a first polymer layer, a first metal layer and a second polymer layer disposed in a stacking manner, the first polymer layer is arranged on a side of the first metal layer facing the second housing, the second polymer layer is arranged on a side of the first metal layer facing away from the second housing, and the first polymer layer is provided with a first through slot penetrating in the thickness direction, so that a surface of the first metal layer facing the second housing includes a first area corresponding to the first through slot and a second area provided with the first polymer layer, and the first area is located between the electrode assembly and the second polymer layer.

In the electrochemical device provided by some embodiments of the present application, the first polymer layer is provided with the first through slot, so that heat generated by the electrode assembly in the operation process may not be blocked by the first polymer layer when transferred to the first through slot, but may be transferred outward through the first metal layer with a high thermal conductivity. Therefore, the electrochemical device provided by some embodiments of the present application can improve the current situation of continuous accumulation of internal heat in the operation process of the electrochemical device, thereby reducing the risk of thermal runaway of the electrochemical device.

In some embodiments, a projection of the electrode assembly on the first metal layer falls within the first area in the thickness direction of the electrochemical device. With this arrangement, the electrode assembly may be in direct contact with the first area, so that heat generated by the electrode assembly in the operation process may not be blocked by the first polymer layer when transferred to the first through slot, but may be transferred outward through the first metal layer with a high thermal conductivity.

In some embodiments, the first housing further includes a first thermal conductive material layer. The first thermal conductive material layer is arranged on a side of the first area facing the first through slot, a thermal conductivity of the first metal layer is λ₁, a thermal conductivity of the first thermal conductive material layer is λ₃, and 1.1 ≤ λ₃/λ₁ ≤ 2.5; and the electrode assembly is opposite to the first thermal conductive material layer. Since the thermal conductivity of the first thermal conductive material layer is greater than that of the first metal layer, dissipation of internal heat of the electrochemical device may be accelerated with this arrangement. In some embodiments, 1.5≤λ₃/λ₁≤2, so that the bonding effect between the first thermal conductive material layer and the first metal layer may be improved, which is more conducive to the outward conduction of internal heat of the electrochemical device.

In some embodiments, the first housing includes a first cavity part and a first flange part. The first cavity part includes a first base portion and a first side portion extending from an edge of the first base portion, the first base portion and the first side portion together define a first concave cavity, and the receiving cavity includes the first concave cavity. The first flange part extends outward from one end of the first side portion facing away from the first base portion. The first area is located at the first cavity part, the second area is located at the first flange part, or the first area is located at the first base portion, and the second area is located at the first side portion and the first flange part.

In some embodiments, the second housing includes a third polymer layer, a second metal layer and a fourth polymer layer disposed in a stacking manner, the third polymer layer is disposed on a side of the second metal layer facing the first housing, and the fourth polymer layer is disposed on a side of the second metal layer facing away from the first housing. The third polymer layer is provided with a second through slot penetrating in the thickness direction, a surface of the second metal layer includes a third area corresponding to the second through slot and a fourth area provided with the third polymer layer, and the third area is located between the electrode assembly and the fourth polymer layer.

In this way, the heat generated by the electrode assembly in the operation process can be directly transferred to the third area of the second metal layer through the second through slot, and then transferred outward through the fourth polymer layer, rather than first passing through the third polymer layer, and then passing through the second metal layer and the fourth polymer layer in turn to be transferred outward. With the arrangement of the second through slot, the dissipation of internal heat in the electrochemical device may be further accelerated, thereby reducing the risk of thermal runaway of the electrochemical device.

In some embodiments, a projection of the electrode assembly on the second metal layer falls within the third area in the thickness direction of the electrochemical device. With this arrangement, the electrode assembly may be in direct contact with the third area, so that heat generated by the electrode assembly in the operation process may not be blocked by the third polymer layer when transferred to the second through slot, but may be transferred outward through the second metal layer with a high thermal conductivity.

In some embodiments, the second housing further includes a second thermal conductive material layer. The second thermal conductive material layer is arranged on a side of the third area facing the second through slot, a thermal conductivity of the second metal layer is λ₂, a thermal conductivity of the second thermal conductive material layer is λ₄, and 1.1 ≤ λ₄/λ₂ ≤ 2.5; and the electrode assembly is opposite to the second thermal conductive material layer. Since the thermal conductivity of the second thermal conductive material layer is greater than that of the second metal layer, dissipation of internal heat of the electrochemical device may be accelerated with the arrangement of the second thermal conductive material layer. In some embodiments, 1.5≤λ₄/λ₂≤2, so that the bonding effect between the second thermal conductive material layer and the second metal layer may be improved, which is more conducive to the outward conduction of internal heat of the electrochemical device.

In some embodiments, the second housing includes a second cavity part and a second flange part. The second cavity part includes a second base portion and a second side portion extending from an edge of the second base portion, the second base portion and the second side portion together define a second concave cavity, and the receiving cavity includes the second concave cavity. The second flange part extends outward from one end of the second side portion facing away from the second base portion; and the third area is located at the second cavity part, the fourth area is located at the second flange part, or the third area is located at the second base portion, and the fourth area is located at the second side portion and the second flange part.

In some embodiments, the first polymer layer is integrally formed with the third polymer layer, the first metal layer is integrally formed with the second metal layer, and the second polymer layer is integrally formed with the fourth polymer layer. By adopting this solution, the packaging process may be simplified.

In a second aspect, some embodiments of the present application further provide an electrochemical device component. The electrochemical device component includes a wireless charging module and the electrochemical device described above. The wireless charging module includes a charging coil arranged on an outer surface of the second polymer layer. Since the electrochemical device component includes the electrochemical device in the above embodiments, the electrochemical device component can improve the current situation of continuous accumulation of internal heat in the operation process of the electrochemical device, thereby reducing the risk of thermal runaway of the electrochemical device.

In a third aspect, some embodiments of the present application further provide an electronic device. The electronic device includes the electrochemical device or electrochemical device component described above. Since the electronic device includes the electrochemical device or the electrochemical device component described above, the electronic device provided by some embodiments of the present application may improve the current situation of continuous accumulation of internal heat in the operation process of the electrochemical device to some extent, thereby reducing the risk of thermal runaway of the electrochemical device.

### BRIEF DESCRIPTION OF DRAWINGS

In order to more clearly illustrate the technical solutions in embodiments of the present application, the following will briefly introduce the drawings that are desired to be used in the description of the provided embodiments. Apparently, the drawings in the following description are merely some embodiments of the present application, from which other drawings can be obtained by those ordinarily skilled in the art according to the structures shown in these drawings.
FIG. 1 is a schematic diagram of an electrochemical device according to an embodiment of the present application;
FIG. 2 is a cross-sectional schematic view of the electrochemical device in FIG. 1 taken in a line A-A;
FIG. 3 is a partially enlarged schematic view of a part B in FIG. 2;
FIG. 4 is a cross-sectional schematic view of an electrochemical device according to another embodiment of the present application;
FIG. 5 is a partially enlarged schematic view of a part C in FIG. 4;
FIG. 6 is a cross-sectional schematic view of an electrochemical device according to yet another embodiment of the present application;
FIG. 7 is a partially enlarged schematic view of a part D in FIG. 6;
FIG. 8 is a cross-sectional schematic view of an electrochemical device according to yet another embodiment of the present application;
FIG. 9 is a partially enlarged schematic view of a part E in FIG. 8;
FIG. 10 is a cross-sectional schematic view of an electrochemical device according to an embodiment of the present application;
FIG. 11 is a cross-sectional schematic view of an electrochemical device component according to an embodiment of the present application; and
FIG. 12 is a schematic diagram of an electronic device according to an embodiment of the present application.

In the drawings:
1, Electrochemical device;
100. Receiving housing; 110. First housing; 120. Second housing; 111. First cavity part; 112. First flange part; 113. First metal layer; 114. First polymer layer; 115. Second polymer layer; 123. Second metal layer; 124. Third polymer layer; 125. Fourth polymer layer; 1111. First base portion; 1112. First side portion; 1131. First area; 1132. Second area; 101. Receiving cavity; 1011. First concave cavity; 1101. First through slot;
200. Electrode assembly;
100b. Receiving housing; 110b. First housing; 120b. Second housing; 113b. First metal layer; 114b. First polymer layer; 115b. Second polymer layer; 1131b. First area; 1132b. Second area; 116b. First thermal conductive material layer;
200b. Electrode assembly;
100c. Receiving housing; 110c. First housing; 120c. Second housing; 123c. Second metal layer; 124c. Third polymer layer; 125c. Fourth polymer layer; 126d. Second thermal conductive material layer; 1131c. First area; 1231c. Third area; 1232. Fourth area; 1201c. Second through slot;
200d. Electrode assembly;
100e. Receiving housing; 120e. Second housing; 121e. Second cavity part; 122e. Second flange part; 1211e. Second base portion; 1212e. Second side portion;
2. Electrochemical device component; 21. Wireless charging module; and
3. Electronic device.

### DETAILED DESCRIPTION OF EMBODIMENTS

For ease of understanding the present application, a more detailed description of the present application is given below in conjunction with the accompanying drawings and specific embodiments. It should be noted that when an element is expressed as "fixed to"/"secured to" another element, it may be directly on the other element, or there may be one or more intervening elements there between. When an element is described as "connected" to another element, it may be directly connected to the other element, or there may be one or more intervening elements there between. The terms "vertical", "horizontal", "left", "right", "inside", "outside" and similar expressions used in the description are for illustrative purposes only.

Unless otherwise defined, all technical and scientific terms used herein have the same meanings as commonly understood by those skilled in the art of the present application. Terms used in the description of the present application are for the purpose of describing specific embodiments only and are not intended to limit the present application. The term "and/or" as used herein includes any and all combinations of one or more related listed items.

Further, the technical features described below in different embodiments of the present application may be combined with each other as long as they do not conflict with each other.

In the description, "mounting" includes fixing or limiting a certain element or device to a specific position or place by welding, screwing, clamping, bonding, etc. The element or device may remain immovable or move within a limited range in a specific position or place, and may or may not be removed after being fixed or limited to a specific position or place, which is not limited in the provided embodiments of the present application.

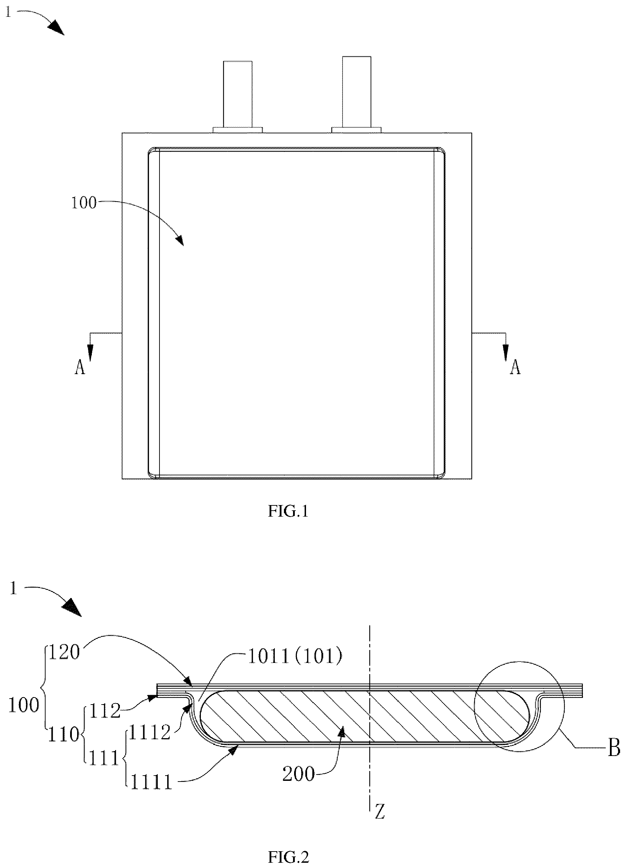

Referring to FIG. 1 to FIG. 3, which respectively show a schematic diagram of an electrochemical device 1 provided by an embodiment of the present application, a sectional schematic diagram of the electrochemical device 1 taken in line A-A, and a partially enlarged schematic diagram of a part B, the electrochemical device 1 includes a receiving housing 100 and an electrode assembly 200. The receiving housing 100 includes a first housing 110 and a second housing 120, which are arranged opposite to each other in a thickness direction Z of the electrochemical device 1 and together define a receiving cavity 101. The electrode assembly 200 is received in the receiving cavity 101. The first housing 110 includes a first polymer layer 114, a first metal layer 113 and a second polymer layer 115 disposed in a stacking manner. The first polymer layer 114 is disposed on a side of the first metal layer 113 facing the second housing 120, and the second polymer layer 115 is disposed on a side of the first metal layer 113 facing away from the second housing 120. The first polymer layer 114 is provided with a first through slot 1101 penetrating in the thickness direction, so that a surface of the first metal layer 113 includes a first area 1131 corresponding to the first through slot 1101 and a second area 1132 provided with the first polymer layer 114. The electrode assembly 200 is received in the receiving cavity 101. The first area 1131 is located between the electrode assembly 200 and the second polymer layer 115. Next, the specific structure of the electrochemical device 1 is described in the case where the electrochemical device 1 is a soft-pack lithium ion battery. However, it should be understood that in other embodiments of the present application, the electrochemical device 1 may be other electrochemical devices such as a sodium ion battery, which is not specifically limited in the present application.

For the receiving housing 100, referring to FIG. 1 and FIG. 2 firstly, the receiving housing 100 includes a first housing 110 and a second housing 120. The first housing 110 and the second housing 120 are arranged opposite to each other in a thickness direction Z of the illustrated electrochemical device 1, and together define a receiving cavity 101 for receiving the electrode assembly 200.

Referring further to FIG. 1 to FIG. 3, the first housing 110 includes a first cavity part 111 and a first flange part 112. The first cavity part 111 is of a box-like structure without a top, and includes a first base portion 1111 and a first side portion 1112. The first base portion 1111 is of a substantially flat sheet-like structure, and the first side portion 1112 extends from an edge of the first base portion 1111. The first base portion 1111 and the first side portion 1112 together define a first concave cavity 1011, and the first concave cavity 1011 is disposed facing the second housing 120. The first flange part 112 extends outward from one end of the first side portion 1112 facing away from the first base portion 1111 and is disposed integrally around the first cavity part 111.

Referring further to FIG. 1 to FIG. 3, the second housing 120 is of a sheet-like structure and is provided at the first flange part 112 and closes the first concave cavity 1011. Thus, the first housing 110 and the second housing 120 together define the receiving cavity 101. The receiving cavity 101 includes the first concave cavity 1011, and the receiving cavity 101 may further include other chambers depending on the actual shape of the receiving housing 100. For example, when the second housing 120 partially expands facing away from the first housing 110, the receiving cavity 101 further includes a concave cavity defined by the second housing 120. In this embodiment, the first housing 110 is hot-melt fixed to the second housing 120 through the first flange part 112, and meanwhile achieves a seal. It will be appreciated that in other embodiments of the present application, the first housing 110 and the second housing 120 may also be fixed by other optional means such as adhesion.

Next, the configurations of the first housing 110 and the second housing 120 will be described respectively.

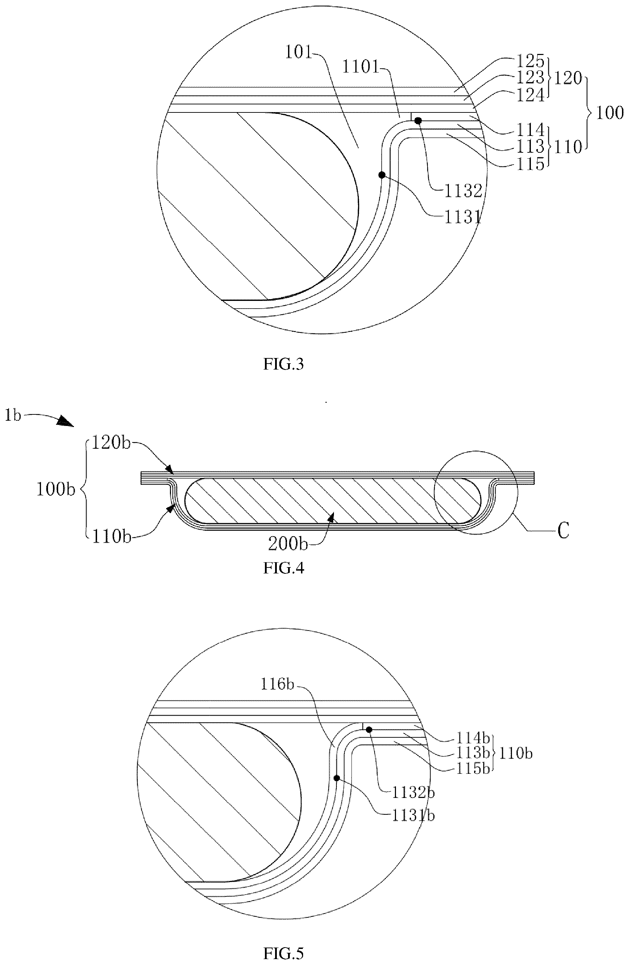

Referring to FIG. 3, the first housing 110 includes a first metal layer 113, a first polymer layer 114, and a second polymer layer 115, and the first metal layer 113, the first polymer layer 114, and the second polymer layer 115 are stacked in the thickness direction Z. The first metal layer 113 is a substrate for bearing the first polymer layer 114 and the second polymer layer 115, and by virtue of the atom density distribution characteristic, the first metal layer may prevent gas-liquid exchange between the receiving cavity 101 and the electrochemical device 1, that is, prevent water vapor from entering the receiving cavity 101 from the outside and prevent electrolyte in the receiving cavity 101 from leaking from the inside to the outside. In addition, the first metal layer 113 has good thermal conductivity so that heat may be rapidly transferred outward when the temperature in the receiving cavity 101 is high. Optionally, the first metal layer 113 is aluminum foil. Of course, in other embodiments of the present application, the first metal layer 113 may also be other metal foil such as copper foil. The first polymer layer 114 is disposed on a side of the first metal layer 113 facing the second housing 120, and is provided with a first through slot 1101 penetrating in the thickness direction Z. Thus, the first metal layer 113 includes a first area 1131 disposed corresponding to the first through slot 1101 and a second area 1132 located outside the first area 1131. In other words, the first area 1131 is an area where the first polymer layer 114 is not provided, and the second area 1132 is an area where the first polymer layer 114 is provided. Optionally, the material of the first polymer layer 114 includes at least one of: polypropylene, polycarbonate, polyamide, polyethylene, acrylonitrile-butadiene-styrene copolymer, polyoxymethylene, polyphenylene ether. The second polymer layer 115 is disposed on a side of the first metal layer 113 facing away from the second housing 120 and is an outer protective material layer of the first housing 110. Optionally, the material of the second polymer layer 115 includes at least one of: polypropylene, polycarbonate, polyamide, polyethylene, acrylonitrile-butadiene-styrene copolymer, polyoxymethylene, polyphenylene ether. The second polymer layer 115 may or may not be of the same material as the first polymer layer 114.

Referring further to FIG. 3, the second housing 120 includes a second metal layer 123, a third polymer layer 124, and a fourth polymer layer 125, and the second metal layer 123, the third polymer layer 124, and the fourth polymer layer 125 are stacked in the thickness direction Z. The second metal layer 123 is a substrate for bearing the third polymer layer 124 and the fourth polymer layer 125, and by virtue of the atom density distribution characteristic, the second metal layer may prevent gas-liquid exchange between the receiving cavity 101 and the electrochemical device 1, that is, prevent water vapor from entering the receiving cavity 101 from the outside and prevent the electrolyte in the receiving cavity 101 from leaking from the inside to the outside. In addition, the second metal layer 123 has good thermal conductivity so that heat may be rapidly transferred outward when the temperature in the receiving cavity 101 is high. Optionally, the second metal layer 123 is aluminum foil. Of course, in other embodiments of the present application, the second metal layer 123 may also be other metal foil such as copper foil. The third polymer layer 124 is disposed on a side of the second metal layer 123 facing the first housing 110, and the third polymer layer is hot-melt fixed to a portion of the first polymer layer 114 located at the first flange part 112. The selection of the material of the third polymer layer 124 may refer to the first polymer layer 114 and will not be described here. Optionally, the third polymer layer 124 and the first polymer layer 114 are of the same material to facilitate better fusion of the two during hot-melt fixation. The fourth polymer layer 125 is disposed on a side of the second metal layer 123 facing away from the second housing 120 and is an outer protective material layer of the second housing 120. The selection of the material of the fourth polymer layer 125 may refer to the second polymer layer 115 and will not be described here. The fourth polymer layer 125 may or may not be of the same material as the third polymer layer 124.

It is worth mentioning that the first housing 110 and the second housing 120 may be separately molded or may be integrally molded. When the first housing and the second housing are integrally molded, the first metal layer 113 and the second metal layer 123 are integrally molded, the first polymer layer 114 and the third polymer layer 124 are integrally molded, and the second polymer layer 115 and the fourth polymer layer 125 are integrally molded.

Referring to FIG. 2, for the electrode assembly 200, the electrode assembly 200 is received in the receiving cavity 101 and is a core element for realizing charging and discharging in the electrochemical device 1. The electrode assembly 200 includes a first electrode plate, a second electrode plate, and a separator disposed in a stacking manner. Polarities of the first electrode plate and the second electrode plate are opposite, and one of the first electrode plate and the second electrode plate is a positive electrode plate, and the other one is a negative electrode plate. The separator is arranged between the first electrode plate and the second electrode plate for separation. In this embodiment, the electrode assembly 200 is of a winding structure. Specifically, the electrode assembly 200 is wound into a cylindrical structure with an oblong cross section, and a thickness direction thereof coincides with the thickness direction Z, so that the electrode assembly is conveniently received in the receiving cavity 101. It will be understood that in other embodiments of the present application, the electrode assembly 200 may also be a laminated structure. Specifically, the first electrode plates and the second electrode plates are alternately arranged in the thickness direction, and the first electrode plate and the second electrode plate adjacent to the first electrode plate are separated by the separator.

In this embodiment, the first area 1131 is located between the electrode assembly 200 and the second polymer layer 115. In another embodiment, the electrode assembly 200 is disposed in the first area 1131 (i.e., in the Z direction, a projection of the electrode assembly 200 on the first metal layer 113 falls within the first area 1131), and is in direct contact with the first area 1131. The first area 1131 may be provided to be large so that the projection of the electrode assembly 200 in the thickness direction Z lies entirely within the first area 1131. Of course, the first area 1131 may also be provided to be small so that a side of the electrode assembly 200 facing the first area 1131 is only partially in contact with the first area 1131. For example, in some embodiments, the first area 1131 is located at the first cavity part 111, and accordingly the second area 1132 is located at the first flange part 112. In this case, the first area 1131 is in a box shape as a whole and includes both a portion located at the first base portion 1111 and a portion located at the first side portion 1112. For another example, in other embodiments, the first area 1131 may also be located at the first base portion 1111, and accordingly, the second area 1132 is located at the first side portion 1112 and the first flange part 112.

The heat generated in the operation process of the electrode assembly 200 may be partially transferred directly to the first area 1131 of the first metal layer 113 through the first through slot 1101, and then transferred outward through the second polymer layer 115, rather than first passing through the first polymer layer 114, and then passing through the first metal layer 113 and the second polymer layer 115 in turn to be transferred outward. Therefore, with the arrangement of the first through slot 1101, dissipation of the internal heat of the electrochemical device 1 may be accelerated to a certain extent, thereby reducing the risk of thermal runaway of the electrochemical device 1.

It should be understood that even though this embodiment is described with the first housing 110 being of a box-shaped structure and the electrode assembly 200 being in direct contact with the first area 1131 in the first housing 110, the present application is not limited thereto as long as it is guaranteed that: the first polymer layer 114 is provided with the first through slot 1101 to expose the first area 1131, and the first area 1131 is located between the electrode assembly 200 and the second polymer layer 115.

For example, FIG. 4 shows a cross-sectional (a cross-sectional direction may refer to the cross-sectional direction in FIG. 2) schematic view of an electrochemical device 1b according to another embodiment of the present application, and FIG. 5 shows a partially enlarged schematic view of a part C. The electrochemical device 1b still includes a receiving housing 100b and an electrode assembly 200b, and the receiving housing 100b includes a first housing 110b and a second housing 120b. The electrochemical device 1b is mainly different from the electrochemical device 1 described above in that: in the electrochemical device 1, the first housing 110 includes the first metal layer 113, the first polymer layer 114, and the second polymer layer 115, and the electrode assembly 200 is directly fixed to the first area 1131 of the first metal layer 113; while in the electrochemical device 1b, the first housing 110b includes a first thermal conductive material layer 116b in addition to a first metal layer 113b, a first polymer layer 114b and a second polymer layer 115b, and the electrode assembly 200b is fixed to a first area 1131b of the first metal layer 113b through the first thermal conductive material layer 116b. Specifically, the first thermal conductive material layer 116b is disposed on a side of the first area 1131b facing a first through slot, and satisfies: 1.1 ≤ λ₃/λ₁ ≤ 2.5, where λ₁ denotes the thermal conductivity of the first metal layer 113b, and λ₃ denotes the thermal conductivity of the first thermal conductive material layer 116b. For example, when the first metal layer is aluminum foil, the first thermal conductive material layer 116b may be copper foil. The electrode assembly 200b is disposed opposite to the first thermal conductive material layer 116b. In this embodiment, the electrode assembly 200b is fixed to the first thermal conductive material layer 116b. Of course, in other embodiments, the electrode assembly 200b may also be fixed to the first polymer layer 114b or the second housing 120b. Since the thermal conductivity of the first thermal conductive material layer 116b is greater than that of the first metal layer 113b, dissipation of internal heat of the electrochemical device 1b may be accelerated with arrangement of the thermal conductivity of the first thermal conductive material layer. In some embodiments, 1.5≤λ₃/λ₁≤2, so that the bonding effect between the first thermal conductive material layer 116b and the first metal layer 113b may be improved, which is more conducive to the outward conduction of internal heat of the electrochemical device 1b.

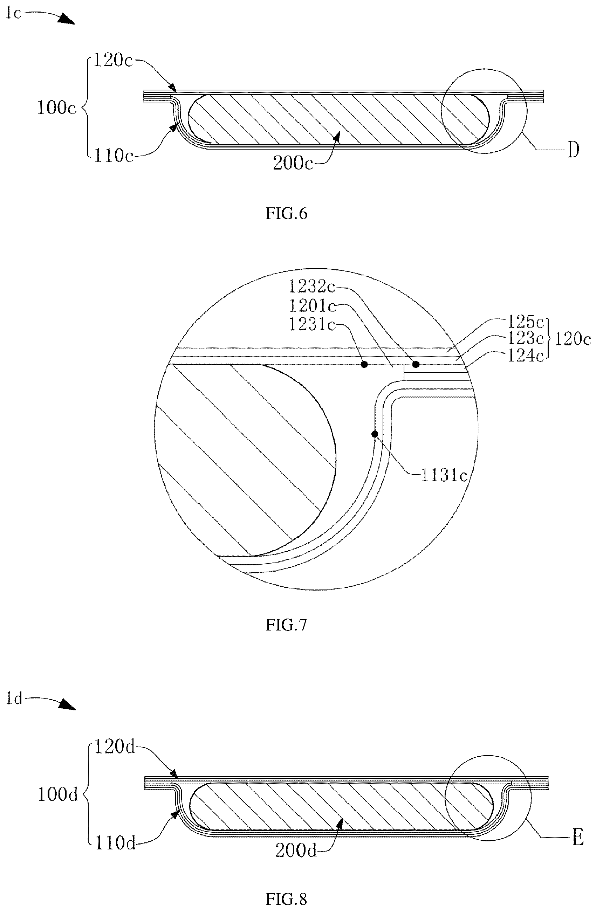

For example, FIG. 6 shows a cross-sectional (a cross-sectional direction may refer to the cross-sectional direction in FIG. 2) schematic view of an electrochemical device 1c according to yet another embodiment of the present application, and FIG. 7 shows a partially enlarged schematic view of a part D, the electrochemical device 1c still includes a receiving housing 100c and an electrode assembly 200c, and the receiving housing 100c includes a first housing 110c and a second housing 120c. The electrochemical device 1c is mainly different from the electrochemical device 1 described above in that: in the electrochemical device 1, only the first polymer layer 114 of the first housing 110 is provided with the first through slot 1101 to expose a portion of the first metal layer 113, i.e., the first area 1131; while in the electrochemical device 1c, the first housing 110c is provided in the same manner, and a third polymer layer 124c in the second housing 120c is provided with a second through slot 1201c penetrating in the thickness direction Z so as to expose a portion of a second metal layer 123c. Specifically, the second metal layer 123c includes a third area 1231c disposed corresponding to the second through slot 1201c, and a fourth area 1232c located outside the third area 1231c, and the fourth area 1232c is an area provided with the third polymer layer 124c. The third area 1231c is located between the electrode assembly 200 and the fourth polymer layer 125c. In this embodiment, a projection of the electrode assembly 200c on the second metal layer 123c falls within the third area 1231c in the thickness direction Z. Thus, the heat generated in the operation process of the electrode assembly 200c may be directly transferred to the third area 1231c of the second metal layer 123c through the second through slot 1201c, and then transferred outward through the fourth polymer layer 125c, rather than first passing through the third polymer layer 124c, and then passing through the second metal layer 123c and the fourth polymer layer 125c in turn to be transferred outward. With the arrangement of the second through slot 1201c, dissipation of the internal heat of the electrochemical device 1 may be further accelerated, thereby reducing the risk of thermal runaway of the electrochemical device.

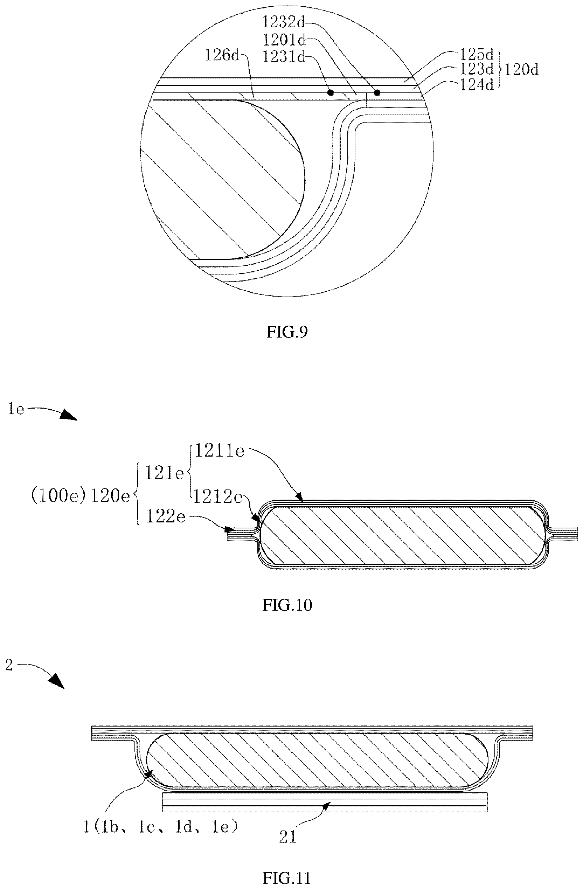

For example, FIG. 8 shows a cross-sectional (a cross-sectional direction may refer to the cross-sectional direction in FIG. 2) schematic view of an electrochemical device 1d according to yet another embodiment of the present application, and FIG. 9 shows a partially enlarged schematic view of a part E. The electrochemical device 1d still includes a receiving housing 100d and an electrode assembly 200d, and the receiving housing 100d includes a first housing 110d and a second housing 120d. The electrochemical device 1d is mainly different from the electrochemical device 1c described above in that: in the electrochemical device 1c, the second housing 120c includes the second metal layer 123c, the third polymer layer 124c and the fourth polymer layer 125c, and the electrode assembly 200c is directly fixed to the first area 1131 of the first metal layer 113 and the third area 1231 of the second metal layer 123c; while in the electrochemical device 1d, the second housing 120d includes a second thermal conductive material layer 126d in addition to a second metal layer 123d, a third polymer layer 124d and a fourth polymer layer 125d, and the electrode assembly 200d is fixed to a third area of the second metal layer 123d through the second thermal conductive material layer 126d. Specifically, the second thermal conductive material layer 126 is disposed on a side of the third area 1231d facing a second through slot 1201d, and satisfies: 1.1 ≤ λ₄/λ₂ ≤ 2.5, where λ₂ denotes the thermal conductivity of the second metal layer 123d, and λ₄ denotes the thermal conductivity of the second thermal conductive material layer 126d. For example, when the second metal layer is aluminum foil, the second thermal conductive material layer 126d may be copper foil. The electrode assembly 200d is disposed opposite to the second thermal conductive material layer 126d. In this embodiment, the electrode assembly 200d is fixed to the second thermal conductive material layer 126d. Of course, in other embodiments, the electrode assembly 200d may be fixed to the first polymer layer described above. Since the thermal conductivity of the second thermal conductive material layer 126d is greater than that of the second metal layer 121d, dissipation of internal heat of the electrochemical device may be accelerated with the arrangement of the second thermal conductive material layer. In some embodiments, 1.5≤λ₄/λ₂≤2, so that the bonding effect between the second thermal conductive material layer 126d and the second metal layer 121d may be better, which is more conducive to the outward conduction of internal heat of the electrochemical device 1b.

It is to be understood that the present application may also be adaptively combined or modified on the basis of the above embodiments, which will not be described herein.

In addition, even though the second housing in each of the above embodiments is flat, in fact, the second housing may be in a shape similar to that of the first housing. Similarly, even though the first housing in each embodiment is box-shaped, the first housing may also be of a flat structure, and the specific shapes of the first housing and the second housing are not limited herein. For example, referring to FIG. 10, which shows a cross-sectional schematic view of an electrochemical device 1e according to an embodiment of the present application, the electrochemical device is mainly different from the electrochemical devices provided by the above embodiments in that: a second housing 120e of the electrochemical device 1e is not flat but is of a substantially box-shaped structure and includes a second cavity part 121e and a second flange part 122e. The second cavity part 121e is of a box-like structure without a top and includes a second base portion 1211e and a second side portion 1212e. The second base portion 1211e is of a substantially flat sheet-like structure, and the second side portion 1212e extends from an edge of the second base portion 1211e. The second base portion 1211e and the second side portion 1212e together define a second concave cavity, the second concave cavity is arranged facing the first housing 110e, and the receiving cavity includes the second concave cavity. The second flange part 122e extends outward from one end of the second side portion 1212e facing away from the second base portion 1211e and is disposed integrally around the second cavity part 121e. The second flange part 122e is stacked and fixed to the first flange part so that the second housing 120e and the first housing together define the receiving cavity. When the second housing 120e has the third area and the fourth area, the third area may be located in the second cavity part 121, and accordingly, the fourth area is located in the second flange part. Alternatively, the third area is located at the second base portion, and accordingly, the fourth area is located at the second side portion and the second flange part.

In summary, the electrochemical device 1 provided in the present application includes the receiving housing 100 and the electrode assembly 200. The receiving housing 100 includes the first housing 110 and the second housing 120. The first housing 110 includes the first polymer layer 114, the first metal layer 113 and the second polymer layer 115 disposed in a stacking manner. The first polymer layer 114 is disposed on the side of the first metal layer 113 facing the second housing 120. The first polymer layer 114 is provided with the first through slot 1101, so that the first metal layer 113 includes the first area 1131 provided corresponding to the first through slot 1101 and the second area 1132 provided with the first polymer layer 114. The first area 1131 is located between the electrode assembly 200 and the second polymer layer 115.

With the arrangement of the first through slot 1101, heat generated in the operation process of the electrode assembly may not be blocked by the first polymer layer 114 when transferred to the first through slot 1101, but may be transferred outward through the first metal layer 113 with a high thermal conductivity. Therefore, the electrochemical device provided by some embodiments of the present application can improve the current situation of continuous accumulation of internal heat in the operation process of the electrochemical device, thereby reducing the risk of thermal runaway of the electrochemical device.

Based on the same inventive concept, the present application further provides an electrochemical device component 2. Referring to FIG. 11, which shows a cross-sectional schematic view of the electrochemical device component 2, in conjunction with other drawings, the electrochemical device component 2 includes a wireless charging module 21 and the electrochemical devices 1 (1b, 1c, 1d, and 1e) in the above-described embodiments. The wireless charging module 21 includes a charging coil, and the wireless charging module 21 is arranged on the outer surface of the second polymer layer 115. The wireless charging module 21 is electrically connected to the electrochemical device 1 and is used for charging the electrochemical device 1. Preferably, the wireless charging module 21 is disposed opposite to the first area. In this embodiment, the electrochemical device component 2 is a wireless rechargeable battery. Of course, in other embodiments of the present application, the electrochemical device component 2 may also be a module or other device in a wireless rechargeable battery.

Since the electrochemical device component includes the electrochemical device in the above embodiments, the electrochemical device component 2 can improve the current situation of continuous accumulation of internal heat in the operation process of the electrochemical device, thereby reducing the risk of thermal runaway of the electrochemical device.

In addition, it is worth adding that the wireless rechargeable battery on the market at present needs to be additionally provided with a graphite material layer with high thermal conductivity in the wireless charging module due to the poor heat dissipation performance of electrochemical devices, which leads to the large overall size of the wireless rechargeable battery. In contrast, the electrochemical device in the electrochemical device component 2 provided by some embodiments of the present application has better heat dissipation performance, so that the graphite material layer in the wireless charging module can be omitted, and further the current situation that the current wireless rechargeable battery occupies a large size can be improved.

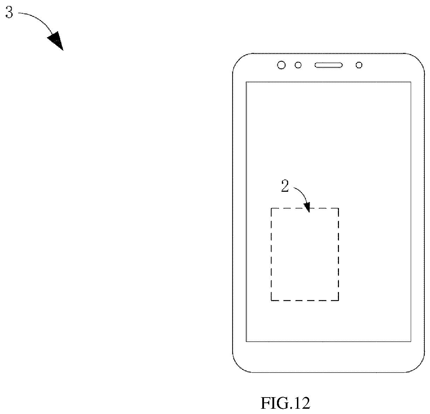

Based on the same inventive concept, the present application further provides an electronic device 3. Referring to FIG. 12, which shows a schematic diagram of the electronic device 3 provided by an embodiment of the present application, the electronic device includes the electrochemical device component 2 in the above embodiment and a load structure powered by the electrochemical device component 2. In this embodiment, the electronic device 3 includes a mobile phone. It will be appreciated that in other embodiments of the present application, the electronic device may also be a tablet computer, a computer, a drone or other electrically powered device.

In other embodiments of the present application, the electronic device 3 may further include only the electrochemical device described in any one of the above embodiments.

Since the electronic device includes the electrochemical device in the above-described embodiment, the electronic device 3 can improve the current situation of continuous accumulation of internal heat in the operation process of the electrochemical device, thereby reducing the risk of thermal runaway of the electrochemical device.

Finally, it should be noted that: The above embodiments are only used to illustrate the technical solutions of the present application, not to limit it. In the ideas of the present application, the technical features of the above embodiments or different embodiments may also be combined, the steps may be carried out in any order, and there are many other variations of different aspects of the present application as described above, which are not provided in detail for brevity. Although the present application has been described in detail with reference to the foregoing embodiments, it should be understood by those of ordinary skill in the art that the technical solutions described in the foregoing embodiments can still be modified or some of the technical features thereof can be equivalently replaced. However, these modifications or substitutions do not depart the essence of the corresponding technical solution from the scope of the technical solution of each embodiment of the present application.

## Claims

1. An electrochemical device (1), comprising:
a receiving housing (100) comprising a first housing (110) and a second housing (120), wherein the first housing (110) and the second housing (120) are opposite to each other in a thickness direction of the electrochemical device (1) and together define a receiving cavity (101); and
an electrode assembly (200) received in the receiving cavity (101), **characterized in that**,
the first housing (110) comprises a first polymer layer (114), a first metal layer (113) and a second polymer layer (115) stacked together;
the first polymer layer (114) is arranged on a side of the first metal layer (113) facing the second housing (120), the second polymer layer (115) is arranged on a side of the first metal layer (113) facing away from the second housing (120); and
the first polymer layer (114) is provided with a first through slot penetrating in the thickness direction, so that a surface of the first metal layer (113) facing the second housing (120) comprises a first area (1131) corresponding to the first through slot and a second area(1132) provided with the first polymer layer (114), and the first area (1131) is located between the electrode assembly (200) and the second polymer layer (115).

2. The electrochemical device (1) according to claim 1, **characterized in that**, a projection of the electrode assembly (200) on the first metal layer (113) falls within the first area (1131); the projection of the electrode assembly (200) on the first metal layer (113) being in the thickness direction of the electrochemical device (1).

3. The electrochemical device (1) according to any one of claims 1 to 2, **characterized in that**, the first housing (110) further comprises a first thermal conductive material layer,
wherein the first thermal conductive material layer is arranged on a side of the first area (1131) facing the first through slot, a thermal conductivity of the first metal layer (113) is λ₁, a thermal conductivity of the first thermal conductive material layer is λ₃, and 1.1 ≤ λ₃/λ₁ ≤ 2.5; and
the electrode assembly (200) is opposite to the first thermal conductive material layer.

4. The electrochemical device (1) according to any one of claims 1 to 3, **characterized in that** 1.5≤λ₃/λ₁≤2.

5. The electrochemical device (1) according to any one of claims 1 to 4, **characterized in that** the first housing (110) comprises:
a first cavity part (111) comprising a first base portion (1111) and a first side portion (1112) extending from an edge of the first base portion (1111), wherein the first base portion (1111) and the first side portion (1112) together define a first concave cavity (1011), and the receiving cavity (101) comprises the first concave cavity (1011); and
a first flange part (112) extending outward from one end of the first side portion (1112) facing away from the first base portion (1111),
wherein the first area (1131) is located at the first cavity part (111) and the second area (1132) is located at the first flange part (112); or the first area (1131) is located at the first base portion (1111), and the second area (1132) is located at the first side portion (1112) and the first flange part (112).

6. The electrochemical device (1) according to any one of claims 1 to 5, **characterized in that** the second housing (120) comprises a third polymer layer (124), a second metal layer (123) and a fourth polymer layer (125) stacked together; the third polymer layer (124) is disposed on a side of the second metal layer (123) facing the first housing (110), and the fourth polymer layer (125) is disposed on a side of the second metal layer (123) facing away from the first housing (110); and
the third polymer layer (124) is provided with a second through slot penetrating in the thickness direction, a surface of the second metal layer (123) comprises a third area corresponding to the second through slot and a fourth area provided with the third polymer layer (124), and the third area is located between the electrode assembly (200) and the fourth polymer layer (125).

7. The electrochemical device (1) according to claim 6, **characterized in that** a projection of the electrode assembly (200) on the second metal layer (123) falls within the third area; the projection of the electrode assembly (200) on the second metal layer (123) being in the thickness direction of the electrochemical device (1).

8. The electrochemical device (1) according to claim 6, **characterized in that** the second housing (120) further comprises a second thermal conductive material layer,
wherein the second thermal conductive material layer is arranged on a side of the third area facing the second through slot, a thermal conductivity of the second metal layer (123) is λ₂, and a thermal conductivity of the second thermal conductive material layer is λ₄, 1.1 ≤ λ₄/λ₂ ≤ 2.5; and
the electrode assembly (200) is opposite to the second thermal conductive material layer.

9. The electrochemical device (1) according to claim 6, **characterized in that** 1.5≤λ₄/λ₂≤2.

10. The electrochemical device (1) according to claim 6, **characterized in that** the second housing (120) comprises:
a second cavity part comprising a second base portion and a second side portion extending from an edge of the second base portion, wherein the second base portion and the second side portion together define a second concave cavity, and the receiving cavity (101) comprises the second concave cavity; and
a second flange part extending outward from one end of the second side portion facing away from the second base portion,
wherein the third area is located at the second cavity part and the fourth area is located at the second flange part; or the third area is located at the second base portion, and the fourth area is located at the second side portion and the second flange part.

11. The electrochemical device (1) according to any one of claims 1 to 10, **characterized in that** the material of the first polymer layer (114) includes at least one of the following materials: polypropylene, polycarbonate, polyamide, polyethylene, acrylonitrile-butadiene-styrene copolymer, polyformaldehyde or polybenzene ether.

12. The electrochemical device (1) according to any one of claims 1 to 11, **characterized in that** the material of the second polymer layer (115) includes at least one of the following materials: polypropylene, polycarbonate, polyamide, polyethylene, acrylonitrile-butadiene-styrene copolymer, polyformaldehyde or polybenzene ether.

13. The electrochemical device (1) according to claim 6, **characterized in that** the first polymer layer (114) and the third polymer layer (124) are integrated together.

14. An electrochemical device (1) component, **characterized in that** the electrochemical device (1) component comprises:
a wireless charging module (21) comprising a charging coil; and
the electrochemical device according to any one of claims 1 to 13, wherein the wireless charging module (21) is arranged on an outer surface of the second polymer layer (115) opposite to the first area (1131).

15. An electronic device (3), **characterized in that** the electronic device (3) comprises:
the electrochemical device (1) according to any one of claims 1 to 13; or,
the electrochemical device (1) component according to claim 14.
